# EUROPEAN PATENT APPLICATION

(11) **EP 4 604 585 A1**
(43) Date of publication of application: **20.08.2025**
(21) Application number: 25154727.9
(22) Date of filing: 29.01.2025
(51) Int. Cl.: H04W 4/029, G06Q 50/02, G06Q 10/0631

(54) **OPERATION STATUS MANAGEMENT METHOD, OPERATION STATUS MANAGEMENT SYSTEM, AND OPERATION STATUS MANAGEMENT PROGRAM**

(30) Priority: 13.02.2024 JP 2024019425
(71) Applicant: Yanmar Holdings Co., Ltd., Osaka-shi, Osaka (JP)
(72) Inventor: MITANI, Hideki, Okayama-shi (JP)
(74) Representative: Sekiguchi, Kazuya

(57) **Abstract**

[Problem] A travel mode of a work apparatus can be easily recognized.

[Solution] An operation status management method includes acquiring apparatus position information indicating a position of one or more work apparatuses 100 that include a plurality of travel modes, and perform work in a field 600, and travel mode information indicating a travel mode of the work apparatus 100. The operation status management method also includes outputting work apparatus information indicating a position of the work apparatus 100 and a travel mode of the work apparatus 100, in association with each other. The work apparatus information may indicate an image indicating a position of the work apparatus 100 on a map. Further, the plurality of travel modes may include a manual travel mode in which the work apparatus 100 is manually controlled by a worker riding on the work apparatus 100. Further, the plurality of travel modes may include an automatic travel mode in which the work apparatus 100 is controlled from a control terminal 200 communicably connected to the work apparatus 100.

## Description

### TECHNICAL FIELD

The present invention relates to an operation status management method, an operation status management system, and an operation status management program.

### BACKGROUND ART

In recent years, there is a case where not only work is performed by manually traveling a work apparatus, but also work is performed by automatically traveling a work apparatus in a field.

Patent Document 1 discloses a technique in which, when work is performed by manually traveling a work apparatus, farm work equivalent to work by a highly skilled worker is enabled by using a work history of the highly skilled worker. Further, Patent Document 1 describes a technique in which a work apparatus automatically travels along a set work route, as work using the work apparatus.

### PRIOR ART DOCUMENT

### PATENT DOCUMENT

Patent Document 1: Japanese Patent No. 6718838

### SUMMARY OF INVENTION

### TECHNICAL PROBLEM

In this way, since a work apparatus is controlled in various ways due to progress of an information communication technique, it is getting difficult to confirm whether the work apparatus is appropriately operated by a worker.

In view of the above circumstances, one of objects of the present disclosure is to easily recognize a travel mode to be controlled by a work apparatus. Another object can be understood from the following description and description on an embodiment.

### SOLUTION TO PROBLEM

In the following, means for solving the problem is described by using numerals and signs to be used in an embodiment for carrying out the invention. These numbers and signs are added with parentheses, as a reference, to indicate an example of a correspondence between description of the scope according to claims and the embodiment for carrying out the invention. Therefore, the scope according to claims should not be construed as being limited to the description with parentheses.

An operation status management method according to one embodiment to achieve the above-mentioned object includes acquiring apparatus position information indicating a position of one or more work apparatuses (100) that include a plurality of travel modes, and perform work in a field (600), and travel mode information indicating a travel mode of the work apparatus (100). The operation status management method also includes outputting work apparatus information indicating a position of the work apparatus (100) and a travel mode of the work apparatus (100), in association with each other.

An operation status management system (1000) according to one embodiment to achieve the above-mentioned object includes an information acquisition unit (350) and an output unit (370). The information acquisition unit (350) acquires apparatus position information indicating a position of one or more work apparatuses (100) that include a plurality of travel modes, and perform work in a field (600), and travel mode information indicating a travel mode of the work apparatus (100). The output unit (370) outputs work apparatus information indicating a position of the work apparatus (100) and a travel mode of the work apparatus (100), in association with each other.

An operation status management program (550) according to one embodiment to achieve the above-mentioned object causes an arithmetic device (220, 320, 420) to execute acquiring apparatus position information indicating a position of one or more work apparatuses (100) that include a plurality of travel modes, and perform work in a field

(600), and travel mode information indicating a travel mode of the work apparatus (100). The operation status management program (550) also causes the arithmetic device (220, 320, 420) to execute outputting work apparatus information indicating a position of the work apparatus (100) and a travel mode of the work apparatus (100), in association with each other.

### ADVANTAGEOUS EFFECTS OF INVENTION

According to the above embodiment, a user can easily recognize a travel mode of a work apparatus performing work in a field.

### BRIEF DESCRIPTION OF DRAWINGS

FIG. 1 is a schematic diagram of an operation status management system according to one embodiment.
FIG. 2 is a diagram illustrating an image to be displayed on a display terminal according to the embodiment.
FIG. 3 is a schematic diagram of a work apparatus according to the embodiment.
FIG. 4 is a diagram illustrating a configuration of the work apparatus according to the embodiment.
FIG. 5 is a diagram illustrating a functional block to be performed by the operation status management system according to the embodiment.
FIG. 6 is a diagram illustrating a configuration of a control terminal according to the embodiment.
FIG. 7 is a diagram illustrating a configuration of an operation status management device according to the embodiment.
FIG. 8 is a diagram illustrating a configuration of the display terminal according to the embodiment.
FIG. 9 is a flowchart illustrating processing of controlling the work apparatus by the control terminal according to the embodiment.
FIG. 10 is a flowchart illustrating processing of displaying work apparatus information by the display terminal according to the embodiment.
FIG. 11 is a diagram illustrating a configuration of the control terminal according to the embodiment.
FIG. 12 is a diagram illustrating a configuration of the operation status management device according to the embodiment.
FIG. 13 is a diagram illustrating an image to be displayed on the display terminal according to the embodiment.

### DESCRIPTION OF EMBODIMENTS

### (Embodiment)

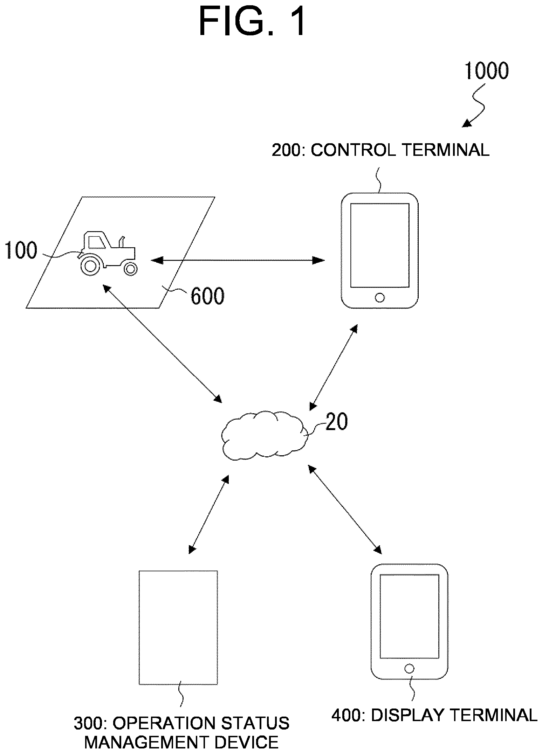

An operation status management system 1000 according to the present embodiment of the present invention is described with reference to the drawings. In the present embodiment, as illustrated in FIG. 1, the operation status management system 1000 includes one or more work apparatuses 100, one or more control terminals 200, an operation status management device 300, and a display terminal 400. The one or more control terminals 200 are communicably connectable to the work apparatus 100, and control the connected work apparatus 100. Further, the operation status management device 300 is communicably connected to the work apparatus 100, the control terminal 200, and the display terminal 400 via a network 20, for example, the Internet, acquires information related to the work apparatus 100 from the work apparatus 100 and the control terminal 200, and outputs the acquired information to the display terminal 400.

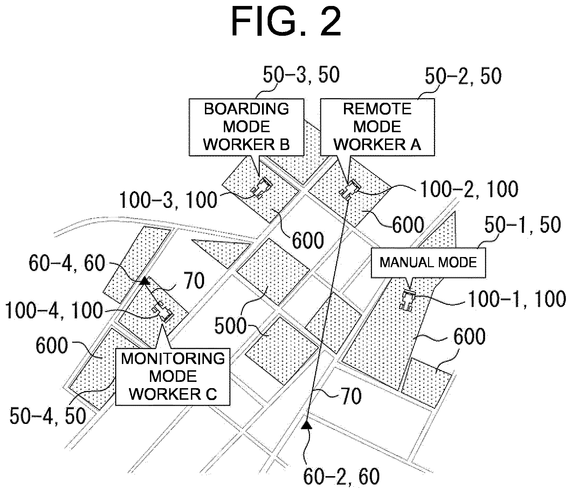

The work apparatus 100 performs work while traveling in a field 600. For example, as exemplified by a first work apparatus 100-1 illustrated in FIG. 2, the work apparatus 100 may perform work in a manual travel mode in which the work apparatus 100 is manually controlled by a worker in a state where the worker is riding on the work apparatus 100. Further, as exemplified by a second work apparatus 100-2, the work apparatus 100 may perform work in a remote travel mode in which the work apparatus 100 is automatically controlled by a worker with use of the control terminal 200 from a remote place, for example, from a position far away where the work apparatus 100 cannot be directly viewed. As exemplified by a third work apparatus 100-3, the work apparatus 100 may perform work in a boarding travel mode in which the work apparatus 100 is automatically controlled by using the control terminal 200 in a state where a worker is riding on the work apparatus 100. As exemplified by a fourth work apparatus 100-4, the work apparatus 100 may perform work in a monitoring travel mode in which the work apparatus 100 is automatically controlled by using the control terminal 200 nearby the work apparatus 100, for example, from a position where the work apparatus 100 can be directly viewed, without a worker riding on the work apparatus 100. When the work apparatus 100 performs work in the field 600, the work apparatus 100 outputs, to the operation status management device 300, apparatus position information indicating a position of the work apparatus 100, and travel mode information indicating a travel mode of the work apparatus 100.

The operation status management device 300 determines, based on apparatus position information to be acquired from the work apparatus 100, a position of the work apparatus 100 that performs work in the field 600. Further, the operation status management device 300 determines, based on travel mode information to be acquired from the work apparatus 100, a travel mode of the work apparatus 100 that performs work in the field 600.

Information indicating a determined position and a determined travel mode of the work apparatus 100 is displayed on the display terminal 400. Therefore, a user, for example, an owner of the field 600 can easily recognize a travel mode of the work apparatus 100 that performs work in the field 600.

Moreover, the control terminal 200 may output, to the operation status management device 300, terminal position information indicating a position of the control terminal 200. The display terminal 400 may display a position of the control terminal 200 that controls the work apparatus 100 in association with the work apparatus 100. This also allows a user to recognize a position of a worker controlling the work apparatus 100.

Further, the control terminal 200 may output, to the operation status management device 300, worker information indicating a worker using the control terminal 200. The display terminal 400 may display information on a worker using the control terminal 200 that controls the work apparatus 100 in association with the work apparatus 100. A user can also easily recognize a worker controlling the work apparatus 100.

### (Configuration of Operation Status Management System)

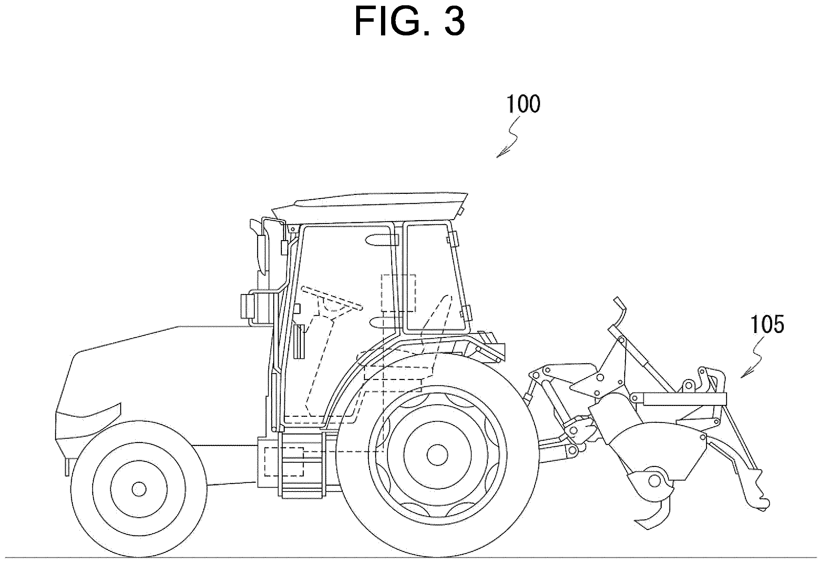

A configuration of the work apparatus 100 included in the operation status management system 1000 illustrated in FIG. 1 is described. For example, as illustrated in FIG. 3, the work apparatus 100 performs plowing work in the field 600 by towing a work machine 105 (e.g., a rotary tiller), and traveling while lowering the work machine 105. The work apparatus 100 may include a device that tows the work machine 105, for example, a tractor, and may include a device integrally formed with the work machine 105, for example, a combine, a rice planting machine, or the like. Further, the work apparatus 100 may include a drone that sprays pesticides.

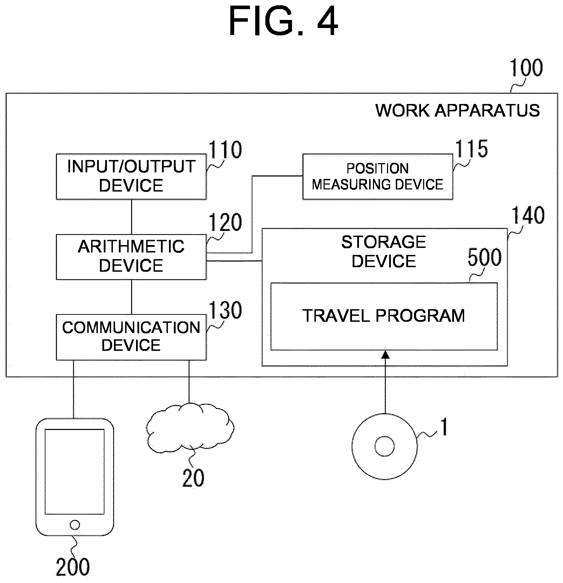

Further, as illustrated in FIG. 4, the work apparatus 100 includes an input/output device 110, a position measuring device 115 an arithmetic device 120, a communication device 130, and a storage device 140. Information for controlling the work apparatus 100 is input to the input/output device 110. Further, the input/output device 110 outputs information for controlling the work apparatus 100, for example, a velocity of the work apparatus 100, a rotation speed of an engine, and the like. Further, the input/output device 110 may include various input devices and output devices, and may include, for example, a steering wheel, a button, a lever, a display, a touch panel, and the like.

The position measuring device 115 acquires apparatus position information indicating a position of the work apparatus 100 at each time. For example, the position measuring device 115 measures a position of the work apparatus 100 at a predetermined interval (e.g., an interval of 10 seconds), and outputs apparatus position information indicating the measured position to the arithmetic device 120. For example, the position measuring device 115 may include a receiver of a global navigation satellite system (GNSS), a quantum compass, and the like.

The communication device 130 is communicably connected to the control terminal 200. For example, the communication device 130 is connected to the control terminal 200 by wired connection or wireless connection directly or via another device, and transfers, to the arithmetic device 120, a signal to be acquired from the control terminal 200. Further, the communication device 130 transfers, to the control terminal 200, a signal generated by the arithmetic device 120. The communication device 130 may be directly connected to the control terminal 200 by wireless connection, for example, by a wireless local area network (LAN). For example, the communication device 130 may include an access point of a wireless LAN.

Further, the communication device 130 is communicably connected to the network 20, and performs communication with each device via the network 20. The communication device 130 transfers, to the arithmetic device 120, a signal to be acquired from the operation status management device 300. Further, the communication device 130 transfers, to the operation status management device 300, a signal generated by the arithmetic device 120. The communication device 130 may acquire information from another device without via the network 20. For example, the communication device 130 may acquire information from another device via any storage medium, for example, a memory card, a universal serial bus (USB) memory, or the like. Further, the communication device 130 may acquire information from directly connected another device by a USB or the like. The communication device 130 includes various interfaces, for example, a transmitter/receiver to be used in wireless communication such as a wireless local area network (LAN) and a cellular network, a network interface card (NIC), a USB, a communication terminal, and the like.

The storage device 140 stores various pieces of data for automatically traveling the work apparatus 100, for example, a travel program 500. The storage device 140 is used as a non-transitory tangible storage medium that stores the travel program 500. The travel program 500 may be provided as a computer program product recorded in a computer-readable storage medium 1, or may be provided as a computer program product that can be downloaded from a server.

The arithmetic device 120 reads the travel program 500 from the storage device 140, executes the travel program 500, and performs various pieces of data processing for automatically traveling the work apparatus 100. For example, the arithmetic device 120 may include an electric control unit (ECU), a central processing unit (CPU), or the like.

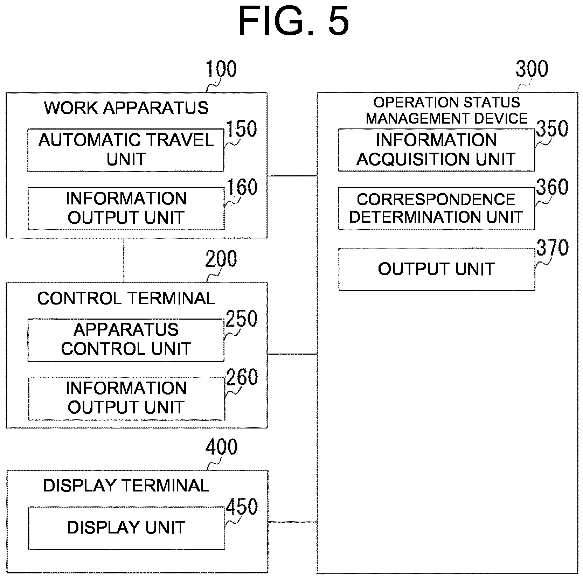

As illustrated in FIG. 5, the arithmetic device 120 reads and executes the travel program 500, thereby achieving an automatic travel unit 150 and an information output unit 160 in cooperation with the storage device 140. The automatic travel unit 150 controls the work apparatus 100 in such a way that the work apparatus 100 automatically travels, based on control information to be acquired from the control terminal 200. The information output unit 160 outputs, to the operation status management device 300, apparatus position information and travel mode information of the work apparatus 100.

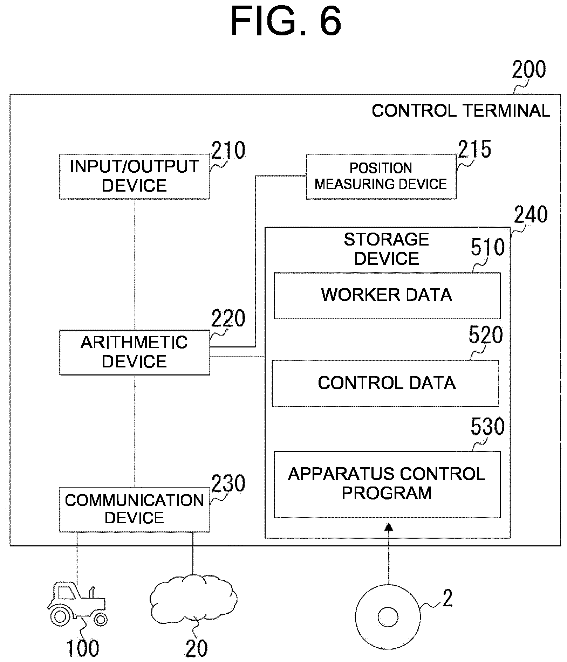

Next, a configuration of the control terminal 200 is described. As illustrated in FIG. 6, the control terminal 200 includes an input/output device 210, a position measuring device 215, an arithmetic device 220, a communication device 230, and a storage device 240. The control terminal 200 includes, for example, a computer, a tablet terminal, a mobile terminal, and the like. Information for causing the arithmetic device 220 to execute processing is input to the input/output device 210. Further, the input/output device 210 outputs a result acquired by causing the arithmetic device 220 to execute the processing. The input/output device 210 includes various input devices and output devices, and includes, for example, a keyboard, a mouse, a microphone, a display, a speaker, a touch panel, and the like.

The position measuring device 215 acquires terminal position information indicating a position of the control terminal 200 at each time. For example, the position measuring device 215 measures a position of the control terminal 200 at a predetermined interval (e.g., an interval of ten minutes), and outputs, to the arithmetic device 220, terminal position information indicating the measured position. For example, the position measuring device 215 may include a receiver of a global navigation satellite system (GNSS), a quantum compass, and the like.

The communication device 230 is communicably connected to the work apparatus 100. For example, the communication device 230 is connected to the work apparatus 100 by wired connection or wireless connection, and transfers, to the arithmetic device 220, a signal to be acquired from the work apparatus 100. Further, the communication device 230 transfers, to the work apparatus 100, a signal generated by the arithmetic device 220.

Further, the communication device 230 is communicably connected to the network 20, and performs communication with each device via the network 20. The communication device 230 transfers, to the arithmetic device 220, a signal to be acquired from the operation status management device 300. Further, the communication device 230 transfers, to the operation status management device 300, a signal generated by the arithmetic device 220. The communication device 230 may acquire information from another device without via the network 20. For example, the communication device 230 may acquire information from another device via any storage medium, for example, a memory card, a universal serial bus (USB) memory, or the like. Further, the communication device 230 may acquire information from directly connected another device by a USB or the like. The communication device 230 includes various interfaces, for example, a transmitter/receiver to be used in wireless communication such as a wireless local area network (LAN) and a cellular network, a network interface card (NIC), a USB, a communication terminal, and the like.

The storage device 240 stores various pieces of data for controlling the work apparatus 100, for example, worker data 510, control data 520, and an apparatus control program 530. The storage device 240 is used as a non-transitory tangible storage medium that stores the apparatus control program 530. The apparatus control program 530 may be provided as a computer program product recorded in a computer-readable storage medium 2, or may be provided as a computer program product that can be downloaded from a server.

The worker data 510 store user information related to a worker who uses the control terminal 200. For example, user information indicates an account name and a password to be input to the input/output device 210 for allowing a worker to use the control terminal 200. Further, user information may indicate a name of a worker in association with an account name and a password.

The control data 520 store control information for controlling the work apparatus 100. For example, control information indicates a route along which the work apparatus 100 travels when work is performed in each field 600. Further, control information may indicate a height of the work machine 105 that tows the work apparatus 100 at each position on the route.

The arithmetic device 220 reads the apparatus control program 530 from the storage device 240, executes the apparatus control program 530, and performs various pieces of data processing for controlling the work apparatus 100. For example, the arithmetic device 220 includes a central processing unit (CPU), and the like.

As illustrated in FIG. 5, the arithmetic device 220 reads and executes the apparatus control program 530, thereby achieving an apparatus control unit 250 and an information output unit 260 in cooperation with the storage device 240. The apparatus control unit 250 outputs, to the work apparatus 100, control information for controlling the work apparatus 100. The information output unit 260 outputs, to the operation status management device 300, terminal position information indicating a position of the control terminal 200, and worker information indicating a worker using the control terminal 200.

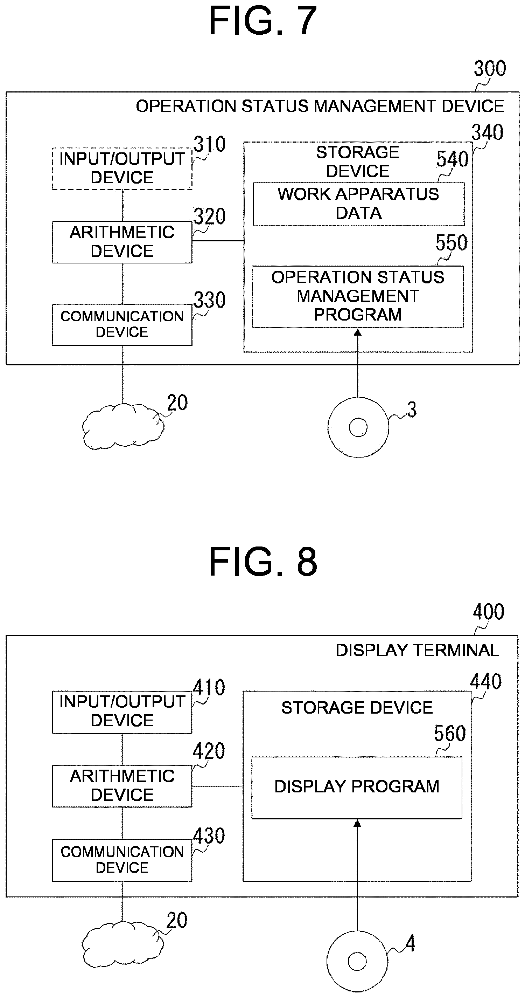

Next, a configuration of the operation status management device 300 is described. As illustrated in FIG. 7, the operation status management device 300 includes an input/output device 310, an arithmetic device 320, a communication device 330, and a storage device 340. The operation status management device 300 is, for example, a computer including a cloud server and the like. Information for causing the arithmetic device 320 to execute processing is input to the input/output device 310. Further, the input/output device 310 outputs a result acquired by causing the arithmetic device 320 to execute the processing. The input/output device 310 includes various input devices and output devices, and includes, for example, a keyboard, a mouse, a microphone, a display, a speaker, a touch panel, and the like. The input/output device 310 may be omitted.

The communication device 330 is communicably connected to the network 20, and performs communication with each device via the network 20. For example, the communication device 330 transfers, to the arithmetic device 320, apparatus position information and travel mode information to be acquired from the work apparatus 100. Further, the communication device 330 transfers, to the arithmetic device 320, terminal position information and worker information to be acquired from the control terminal 200. The communication device 330 transfers, to the display terminal 400, a signal generated by the arithmetic device 320. The communication device 330 includes, for example, various interfaces, such as a network interface card (NIC), and a universal serial bus (USB).

The storage device 340 stores various pieces of data for outputting work apparatus information indicating a travel mode of the work apparatus 100, for example, work apparatus data 540, and an operation status management program 550. The storage device 340 is used as a non-transitory tangible storage medium that stores the operation status management program 550. The operation status management program 550 may be provided as a computer program product recorded in a computer-readable storage medium 3, or may be provided as a computer program product that can be downloaded from a server.

The work apparatus data 540 store, in the work apparatus 100, information related to an operation status. For example, the work apparatus data 540 store information indicating a travel mode of the work apparatus 100, a position of the work apparatus 100, and a worker of the work apparatus 100 in association with one another.

The arithmetic device 320 reads the operation status management program 550 from the storage device 340, executes the operation status management program 550, and performs various pieces of data processing for outputting work apparatus information. For example, the arithmetic device 320 includes a central processing unit (CPU), and the like.

As illustrated in FIG. 5, the arithmetic device 320 reads and executes the operation status management program 550, thereby achieving an information acquisition unit 350, a correspondence determination unit 360, and an output unit 370 in cooperation with the storage device 340. The information acquisition unit 350 acquires apparatus position information and travel mode information from the work apparatus 100. Further, the information acquisition unit 350 acquires terminal position information and worker information from the control terminal 200. The correspondence determination unit 360 determines the control terminal 200 controlling the work apparatus 100. The output unit 370 outputs, to the display terminal 400, work apparatus information indicating a travel mode of the work apparatus 100.

Next, a configuration of the display terminal 400 is described. As illustrated in FIG. 8, the display terminal 400 includes an input/output device 410, an arithmetic device 420, a communication device 430, and a storage device 440. The display terminal 400 includes, for example, a computer, a tablet terminal, a mobile terminal, and the like. Information for causing the arithmetic device 420 to execute processing is input to the input/output device 410. Further, the input/output device 410 outputs a result acquired by causing the arithmetic device 420 to execute the processing. The input/output device 410 includes various input devices and output devices, and includes, for example, a keyboard, a mouse, a microphone, a display, a speaker, a touch panel, and the like.

The communication device 430 is communicably connected to the network 20, and performs communication with each device via the network 20. The communication device 430 transfers, to the arithmetic device 420, a signal to be acquired from the operation status management device 300. Further, the communication device 430 transfers, to the operation status management device 300, a signal generated by the arithmetic device 420. The communication device 430 may acquire information from another device without via the network 20. For example, the communication device 430 may acquire information from another device via any storage medium, for example, a memory card, a universal serial bus (USB) memory, or the like. Further, the communication device 430 may acquire information from directly connected another device by a USB or the like. The communication device 430 includes various interfaces, for example, a transmitter/receiver to be used in wireless communication such as a wireless local area network (LAN) and a cellular network, a network interface card (NIC), a USB, and the like.

The storage device 440 stores various pieces of data for displaying work apparatus information indicating a travel mode of the work apparatus 100, for example, a display program 560. The storage device 440 is used as a non-transitory tangible storage medium that stores the display program 560. The display program 560 may be provided as a computer program product recorded in a computer-readable storage medium 4, or may be provided as a computer program product that can be downloaded from a server.

As illustrated in FIG. 5, the arithmetic device 420 reads and executes the display program 560, thereby achieving a display unit 450 in cooperation with the storage device 440 and the input/output device 410. The display unit 450 displays work apparatus information indicating a travel mode of the work apparatus 100.

### (Operation of Operation Status Management System)

An operation of the operation status management system 1000 is described. First, an operation when work is performed in the field 600 by using the work apparatus 100 is described. When performing work in the field 600, a worker activates a driving device of the work apparatus 100, for example, an engine, an electric motor, and the like. When the driving device of the work apparatus 100 is activated, the arithmetic device 120 of the work apparatus 100 reads the travel program 500 from the storage device 140, and executes the travel program 500. When the travel program 500 is read and executed, the information output unit 160 to be achieved by the arithmetic device 120 acquires position information of the work apparatus 100 from the position measuring device 115, and outputs the acquired position information to the operation status management device 300. The information output unit 160 continues to periodically output the position information to the operation status management device 300 until the driving device is stopped. The position information includes information indicating time at which a position of the work apparatus 100 is measured. Further, the position information may include information for identifying the work apparatus 100.

The information acquisition unit 350 of the operation status management device 300 stores, in the work apparatus data 540, position information acquired from the work apparatus 100. This allows the operation status management device 300 to store position information of the work apparatus 100 performing work in the field 600.

When manually performing work while boarding the work apparatus 100, a worker operates the work apparatus 100 in which the driving device is activated, and starts work in the field 600. When the worker finishes the work in the field 600, the worker stops the driving device of the work apparatus 100. When the driving device is stopped, the information output unit 160 of the work apparatus 100 outputs, to the operation status management device 300, information indicating that the work apparatus 100 is stopped. Upon acquiring the information indicating that the work apparatus 100 is stopped, the information acquisition unit 350 of the operation status management device 300 stores, in the work apparatus data 540, that the work apparatus 100 is stopped.

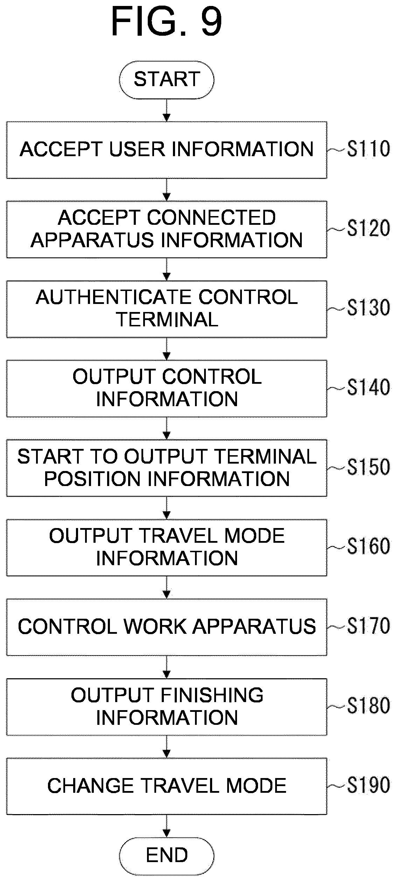

A worker may automatically control the work apparatus 100 by using the control terminal 200 in a state where the worker is riding on the work apparatus 100. For example, after activating the work apparatus 100, a worker inputs, to the input/output device 210 of the control terminal 200, an operation for controlling the work apparatus 100. When the operation is input to the input/output device 210, the arithmetic device 220 of the control terminal 200 reads the apparatus control program 530 from the storage device 240, and executes the apparatus control program 530. For example, when the control terminal 200 is activated, the arithmetic device 220 of the control terminal 200 may read and execute the apparatus control program 530. When the apparatus control program 530 is read and executed, the arithmetic device 220 starts processing illustrated in FIG. 9, which is a part of an operation status management method.

In step S 110, the apparatus control unit 250 to be achieved by the arithmetic device 220 accepts user information of a worker who uses the control terminal 200. The worker inputs his/her account name and password to the input/output device 210. The apparatus control unit 250 compares with user information stored in the worker data 510, and identifies a worker who uses the control terminal 200.

In step S120, the apparatus control unit 250 accepts connected apparatus information indicating the work apparatus 100 to be controlled. The worker inputs, to the input/output device 210, the connected apparatus information indicating the work apparatus 100 to be controlled. The apparatus control unit 250 outputs, to the work apparatus 100 indicated by the input connected apparatus information, a request signal for connection. For example, the apparatus control unit 250 outputs a request signal for connecting to an access point of the communication device 130 of the work apparatus 100. Further, the apparatus control unit 250 may output authentication information to the work apparatus 100, in addition to a request signal for connecting to an access point.

In step S130, the automatic travel unit 150 of the work apparatus 100 authenticates the control terminal 200, based on the request signal and the authentication information to be acquired from the control terminal 200. For example, when the request signal or the authentication information coincides with information registered in advance, the automatic travel unit 150 permits connection from the control terminal 200, and establishes connection with the control terminal 200.

In step S140, when communication with the work apparatus 100 is established, the apparatus control unit 250 of the control terminal 200 outputs, to the work apparatus 100, control information for controlling the work apparatus 100. For example, the apparatus control unit 250 accepts, from control information stored in the control data 520, control information according to work in the field 600. For example, a user selects, from among control information stored in the control data 520, control information suitable for performing work in the field 600. The apparatus control unit 250 outputs the selected control information to the work apparatus 100. The control information includes information indicating the boarding travel mode in which the work apparatus 100 automatically travels by the control terminal 200 in a state where a worker is riding on the work apparatus 100.

In step S150, the apparatus control unit 250 starts outputting, to the operation status management device 300, terminal position information indicating a position measured by the position measuring device 215. For example, the apparatus control unit 250 measures a position of the control terminal 200 at a predetermined interval, and outputs, to the operation status management device 300, terminal position information indicating the measured position. Further, the apparatus control unit 250 may output, to the operation status management device 300, worker information indicating a worker using the control terminal 200, for example, information indicating a name of a worker.

In step S160, the information output unit 160 of the work apparatus 100 determines a travel mode, based on the control information to be acquired from the control terminal 200, and outputs, to the operation status management device 300, travel mode information indicating the determined travel mode. For example, when the control information includes information indicating the boarding travel mode, the automatic travel unit 150 determines, as a travel mode, the boarding travel mode in which the worker performs work while boarding the work apparatus 100. The automatic travel unit 150 outputs, to the operation status management device 300, travel mode information indicating the boarding travel mode. The travel mode information may include information indicating the control terminal 200 that has output the control information to the work apparatus 100.

In step S170, the automatic travel unit 150 controls the work apparatus 100 in accordance with the control information, and performs work in the field 600. For example, the automatic travel unit 150 compares a position of the work apparatus 100 to be measured by the position measuring device 115 with a route indicated by the control information, and controls the work apparatus 100 in such a way that the work apparatus 100 travels along the route indicated by the control information. The control information may be divided according to a current position of the work apparatus 100, and output from the control terminal 200. In this case, the automatic travel unit 150 of the work apparatus 100 outputs, to the control terminal 200, terminal position information indicating a position of the work apparatus 100.

When work indicated by the control information is finished, in step S180, the information output unit 160 outputs, to the operation status management device 300, finishing information indicating that work to be automatically performed, for example, work in the boarding travel mode is finished.

In step S190, the correspondence determination unit 360 of the operation status management device 300 changes the travel mode of the work apparatus 100 stored in the work apparatus data 540 to the manual travel mode, based on the finishing information to be acquired from the work apparatus 100.

In this way, when the work apparatus 100 travels in the boarding travel mode, the operation status management device 300 acquires travel mode information indicating a travel mode of the work apparatus 100, and terminal position information indicating a position of the control terminal 200.

Further, the worker may automatically control the work apparatus 100 by using the control terminal 200 from a position at which the work apparatus 100 can be directly viewed, without boarding the work apparatus 100. Similarly to the boarding travel mode, after activating the work apparatus 100, the worker inputs, to the input/output device 210 of the control terminal 200, an operation for controlling the work apparatus 100. Upon input of the operation, the arithmetic device 220 of the control terminal 200 reads and executes the apparatus control program 530. Herein, in step S140, movement in the monitoring travel mode, and movement in the boarding travel mode are different from each other in the content of control information to be output from the apparatus control unit 250 of the control terminal 200. Specifically, in the monitoring travel mode, control information to be output from the apparatus control unit 250 includes information indicating the monitoring travel mode, in place of information indicating the boarding travel mode. Since other movements are similar to those in the boarding travel mode, detailed description thereof is omitted.

A worker may automatically control the work apparatus 100 by using the control terminal 200 from a remote place, without boarding the work apparatus 100. Also in this case, similarly to the boarding travel mode, after activating the work apparatus 100, the worker input, to the input/output device 210 of the control terminal 200, an operation for controlling the work apparatus 100. Upon input of the operation, the arithmetic device 220 of the control terminal 200 reads and executes the apparatus control program 530. Herein, in the remote travel mode, unlike the boarding travel mode, in step S120, the apparatus control unit 250 of the control terminal 200 outputs a request signal or authentication information for connecting to the work apparatus 100 via the network 20. Further, in step S140, similarly to the monitoring travel mode, the content of control information to be output from the apparatus control unit 250 of the control terminal 200 is different between movement in the remote travel mode and movement in the boarding travel mode. Specifically, in the remote travel mode, control information to be output from the apparatus control unit 250 includes information indicating the remote travel mode, in place of information indicating the boarding travel mode. Since other movements are similar to those in the boarding travel mode, detailed description thereof is omitted.

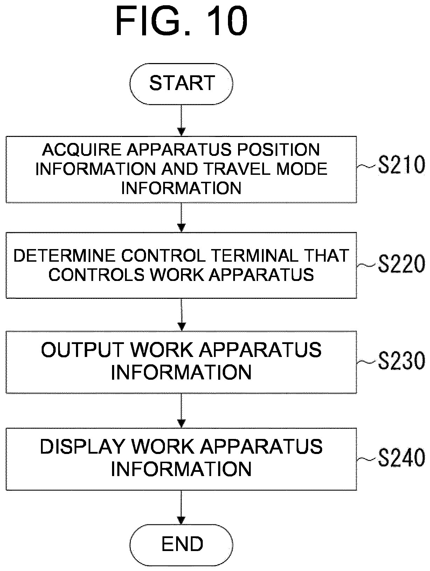

Next, an operation of displaying a travel mode of the work apparatus 100 by the operation status management system 1000 is described. Upon receiving a signal from the work apparatus 100 or the control terminal 200, the arithmetic device 320 of the operation status management device 300 reads the operation status management program 550 from the storage device 340, and executes the operation status management program 550. When the operation status management program 550 is read and executed, the arithmetic device 320 starts processing illustrated in FIG. 10, which is a part of the operation status management method.

In step S210, the information acquisition unit 350 to be achieved by the arithmetic device 320 acquires apparatus position information and travel mode information from the work apparatus 100. For example, the information acquisition unit 350 acquires apparatus position information to be periodically output from the work apparatus 100. Further, the information acquisition unit 350 acquires travel mode information to be output from the work apparatus 100. Furthermore, the information acquisition unit 350 acquires terminal position information to be periodically output from the control terminal 200. The information acquisition unit 350 stores, in the work apparatus data 540, the acquired each piece of information.

For example, in the example illustrated in FIG. 2, the information acquisition unit 350 acquires each piece of apparatus position information indicating a position of each work apparatus 100, for example, the first work apparatus 100-1, the second work apparatus 100-2, the third work apparatus 100-3, and the fourth work apparatus 100-4. In addition, the information acquisition unit 350 acquires a position of the control terminal 200 that controls the work apparatus 100, in other words, terminal position information indicating a position of a worker who controls the work apparatus 100. The information acquisition unit 350 acquires, from the control terminal 200, worker information indicating a worker using the control terminal 200. In addition, when the information acquisition unit 350 acquires apparatus position information from each work apparatus 100, and does not acquire travel mode information, the travel mode of each work apparatus 100 may be determined as the manual travel mode in which the worker manually controls the work apparatus 100 while boarding the work apparatus 100.

In step S220 illustrated in FIG. 10, the correspondence determination unit 360 determines the control terminal 200 that controls the work apparatus 100, based on information indicating the control terminal 200 included in the travel mode information. For example, the correspondence determination unit 360 determines the control terminal 200 indicated in the travel mode information, as the control terminal 200 that controls the work apparatus 100 from which the travel mode information is output. Further, the correspondence determination unit 360 determines a position indicated by the terminal position information of the control terminal 200, as a worker position 60 indicating a position of a worker who controls the work apparatus 100.

For example, in the example illustrated in FIG. 2, travel mode information to be output from the second work apparatus 100-2 includes information indicating the control terminal 200 that controls the second work apparatus 100-2. The correspondence determination unit 360 determines the control terminal 200 that controls the second work apparatus 100-2, based on the travel mode information. The correspondence determination unit 360 determines, as a position of the worker who controls the second work apparatus 100-2, a position indicated by terminal position information of the determined control terminal 200, for example, a second worker position 60-2. Likewise, the correspondence determination unit 360 determines, as a position of the worker who controls the fourth work apparatus 100-4, a fourth worker position 60-4.

In step S230 illustrated in FIG. 10, the output unit 370 outputs, to the display terminal 400, work apparatus information indicating a travel mode of the work apparatus 100. For example, as illustrated in FIG. 2, the work apparatus information indicates a position of one or more work apparatuses 100 on a map, and indicates a travel mode of each work apparatus 100 in association with the corresponding work apparatus 100. In addition, the work apparatus information may indicate a position of the control terminal 200 that controls the work apparatus 100, in other words, a position of the worker who controls the work apparatus 100 in association with the corresponding work apparatus 100. The work apparatus information may indicate information related to a worker who uses the control terminal 200 in association with the work apparatus 100 to be controlled by the control terminal 200.

In step S240 illustrated in FIG. 10, the display unit 450 of the display terminal 400 displays work apparatus information to be acquired from the operation status management device 300. For example, as illustrated in FIG. 2, the display unit 450 displays an image indicating a position of one or more work apparatuses 100 on a map, and indicating a travel mode of the work apparatus 100 in association with the corresponding work apparatus 100. For example, a travel mode of each work apparatus 100 is displayed in a travel mode display area 50 displayed in association with the work apparatus 100. In the example illustrated in FIG. 2, a travel mode of the first work apparatus 100-1 is displayed in a first travel mode display area 50-1, and a "manual mode" indicating that the worker is manually controlling while boarding the work apparatus is displayed in the first travel mode display area 50-1. A travel mode of the second work apparatus 100-2 is displayed in a second travel mode display area 50-2, and a "remote mode" indicating that the worker is automatically controlling from a remote place is displayed in the second travel mode display area 50-2. A travel mode of the third work apparatus 100-3 is displayed in a third travel mode display area 50-3, and an "onboard mode" indicating that the worker is automatically controlling while boarding the work apparatus is displayed in the third travel mode display area 50-3. A travel mode of the fourth work apparatus 100-4 is displayed in a fourth travel mode display area 50-4, and a "monitoring mode" indicating that the worker is automatically controlling from a position at which the work apparatus 100 can be directly viewed is displayed in the fourth travel mode display area 50-4.

In addition, the display unit 450 may display the worker position 60 indicating a position of a worker controlling the work apparatus 100 on a map. For example, the display unit 450 displays the second worker position 60-2 on the map, as a position of the worker controlling the second work apparatus 100-2. In addition, the display unit 450 may display an association line 70 that associates the second work apparatus 100-2 with the second worker position 60-2 of the worker controlling the second work apparatus 100-2. The association line 70 is indicated, for example, by a straight line connecting a position of the second work apparatus 100-2 and the second worker position 60-2. Likewise, regarding the fourth work apparatus 100-4, the display unit 450 displays the association line 70 connecting the fourth worker position 60-4 and a position of the fourth work apparatus 100-4.

The display unit 450 may display a worker controlling the work apparatus 100 in association with the work apparatus 100 being controlled. For example, the display unit 450 displays the worker controlling the work apparatus 100 in the travel mode display area 50. In the example illustrated in FIG. 2, a "worker A" is displayed as a worker who controls the second work apparatus 100-2 in the second travel mode display area 50-2. Further, the second worker position 60-2 indicates a position of the "worker A". Further, a "worker B" is displayed as a worker who controls the third work apparatus 100-3 in the third travel mode display area 50-3. Since the "onboard mode" is displayed as the travel mode of the third work apparatus 100-3, a position of the "worker B" is indicated by the position of the third work apparatus 100-3. A "worker C" is displayed as a worker who controls the fourth work apparatus 100-4 in the fourth travel mode display area 50-4. The fourth worker position 60-4 indicates a position of the "worker C".

In this way, a user can easily recognize a travel mode of the work apparatus 100 by confirming work apparatus position displayed on the display terminal 400. Further, the user can also easily recognize a worker controlling the work apparatus 100, and a position of the worker.

### (Modifications)

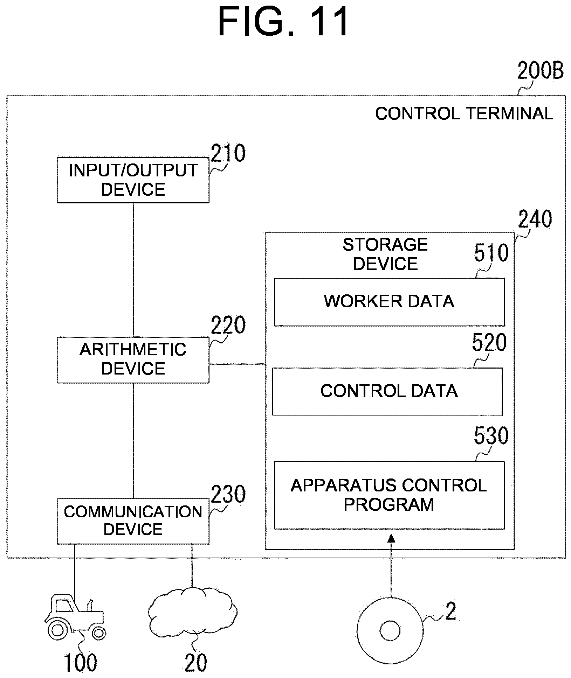

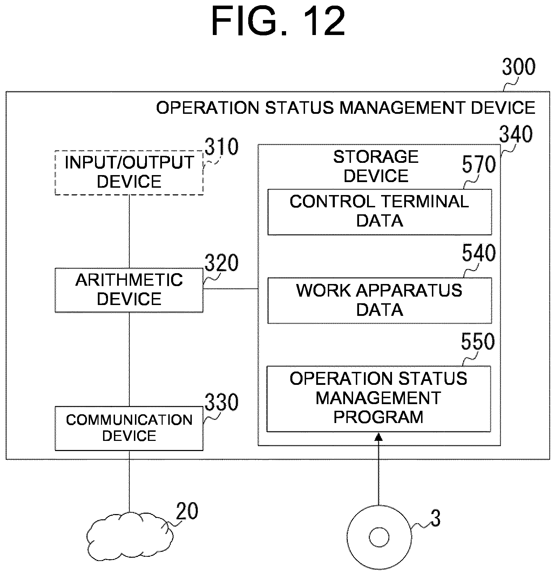

The configuration described in the embodiment is an example, and the configuration can be modified within a range in which the functions are not inhibited. For example, as illustrated in FIG. 11, a control terminal 200B may be a computer installed in a room or the like without including the position measuring device 215. In this case, as illustrated in FIG. 12, the storage device 340 of the operation status management device 300 stores the control terminal data 570 that store information indicating a position where the control terminal 200 is installed. For example, in step S150 illustrated in FIG. 9, the information output unit 260 of the control terminal 200B may output worker information without outputting terminal position information. When acquiring worker information without acquiring terminal position information from the control terminal 200, the information acquisition unit 350 of the operation status management device 300 may acquire, from the control terminal data 570, a position of the control terminal 200 that has output the worker information.

In step S 110 illustrated in FIG. 9, the apparatus control unit 250 of the control terminal 200 may not accept a password, as user information. Further, the apparatus control unit 250 may accept worker information, for example, a name of a worker. Furthermore, when a person who uses the control terminal 200 is fixed, the apparatus control unit 250 does not have to accept user information. In this case, information on a worker who uses the control terminal 200 is registered in advance in the control terminal 200, and when the control terminal 200 is activated, the apparatus control unit 250 identifies the registered worker, as a worker who uses the control terminal 200. Further, when the operation status management system 1000 does not display worker information, processing of step S110 may be omitted.

In step S140 illustrated in FIG. 9, control information to be output from the apparatus control unit 250 of the control terminal 200 indicates the monitoring travel mode and the remote travel mode in a distinguishable manner, however, the present invention is not limited thereto. In step S160, any method may be used, as long as the information output unit 160 of the work apparatus 100 can specify a travel mode when the work apparatus 100 is controlled by the control terminal 200. For example, control information may indicate a non-boarding travel mode without distinguishing between the monitoring travel mode and the remote travel mode. In this case, for example, the information output unit 160 of the work apparatus 100 may distinguish between the monitoring travel mode and the remote travel mode depending on whether the control terminal 200 is directly connected to an access point or the like of the work apparatus 100. For example, when the control terminal 200 is directly connected to the work apparatus 100, the information output unit 160 determines the monitoring travel mode, as a travel mode of the work apparatus 100. Further, when the control terminal 200 is connected to the work apparatus 100 via the network 20, the information output unit 160 determines the remote travel mode, as a travel mode of the work apparatus 100. Further, when the operation status management system 1000 does not display the monitoring travel mode and the remote travel mode in a distinguishable manner, control information to be output from the control terminal 200, and the information output unit 160 may use the non-boarding travel mode without distinguishing between the monitoring travel mode and the remote travel mode.

Further, the operation status management system 1000 may display the boarding travel mode and the non-boarding travel mode, as an automatic travel mode without distinguishing between the boarding travel mode and the non-boarding travel mode. In this case, control information to be output from the control terminal 200, and the information output unit 160 may use the automatic travel mode without distinguishing between the boarding travel mode and the non-boarding travel mode.

Further, in step S210 illustrated in FIG. 10, an example in which the information acquisition unit 350 of the operation status management device 300 determines the manual travel mode is described, however, the present invention is not limited thereto. For example, when the information output unit 160 of the work apparatus 100 does not receive control information from the control terminal 200, the information output unit 160 may determine the travel mode of the work apparatus 100, as the manual travel mode. In this case, for example, when the work apparatus 100 is activated, the information output unit 160 may output, to the operation status management device 300, travel mode information indicating the manual travel mode.

Apparatus position information of the work apparatus 100, and travel mode information may be output to the operation status management device 300 by any method. For example, the information output unit 160 of the work apparatus 100 may output, to the operation status management device 300, apparatus position information of the work apparatus 100, and travel mode information via the control terminal 200. Further, in step S140 illustrated in FIG. 9, travel mode information may be output from the information output unit 260 of the control terminal 200 to the operation status management device 300.

Terminal position information of the control terminal 200, and worker information may be output to the operation status management device 300 by any method. For example, the information output unit 260 of the control terminal 200 may be output to the operation status management device 300 via the work apparatus 100.

Further, an example in which information indicating the control terminal 200 that controls the work apparatus 100 is included in travel mode information is described, however, the present invention is not limited thereto. Information indicating the control terminal 200 that controls the work apparatus 100 may be output to the operation status management device 300 by any method. For example, information indicating the control terminal 200 that controls the work apparatus 100 may be output from the control terminal 200 to the operation status management device 300. For example, information indicating the control terminal 200 that controls the work apparatus 100 may be included in terminal position information, and output to the operation status management device 300.

The display unit 450 of the display terminal 400 may display various pieces of information related to the work apparatus 100. The display unit 450 may display time related to various pieces of information, for example, apparatus position information, terminal position information, travel mode information, and the like. For example, the display unit 450 may display time at which a position of the work apparatus 100 is measured in association with the work apparatus 100. Further, the display unit 450 may display time at which a position of the control terminal 200 is measured in association with a position of the control terminal 200. The display unit 450 may display time at which the operation status management device 300 receives travel mode information or finishing information. In this case, the operation status management device 300 stores each time in the work apparatus data 540.

Further, the display unit 450 may display a distance from a position of the work apparatus 100 to a position of the control terminal 200. In this case, for example, the information acquisition unit 350 of the operation status management device 300 may compute a distance from a position of the work apparatus 100 to a position of the control terminal 200, and store the computed distance in the work apparatus data 540. For example, information indicating a computed distance is included in work apparatus information, and output to the display terminal 400.

Further, the display unit 450 may not display a position of the control terminal 200. In this case, the control terminal 200 does not include the position measuring device 215, and does not have to output terminal position information.

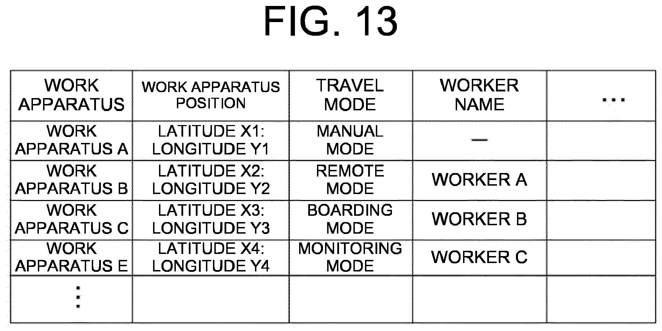

The display unit 450 may display work apparatus information in any format. For example, as illustrated in FIG. 13, the display unit 450 may display work apparatus information in a table format. The display unit 450 may display various pieces of information, for example, a position of the work apparatus 100, a travel mode of the work apparatus 100, a name of a worker controlling the work apparatus 100, and the like in association with the work apparatus 100.

The embodiment and modifications described above are each an example, and the configuration described in each embodiment and the modifications may be optionally modified and/or optionally combined to the extent that does not inhibit the functions. Furthermore, a part of the functions that have been described in the embodiment and the modifications may be omitted, as far as the necessary functions can be achieved. For example, processing of the display terminal 400 may be performed by the operation status management device 300. Furthermore, a part or all pieces of processing of the operation status management device 300 may be performed by the control terminal 200 or the display terminal 400. A part or all pieces of processing of the display terminal 400 may be performed by the control terminal 200.

Further, the operation status management program 550 may include the travel program 500, or may include the apparatus control program 530, or may include the display program 560.

Further, the operation status management system 1000 may not include the work apparatus 100, and may acquire various pieces of information from an external work apparatus that is not included in the operation status management system 1000. Further, the operation status management system 1000 may not include the control terminal 200, and may acquire various pieces of information from an external control terminal that is not included in the operation status management system 1000. Further, the operation status management system 1000 may not include the display terminal 400, and may display work apparatus information on an external control terminal that is not included in the operation status management system 1000.

### (Supplementary Notes)

The operation status management method, the operation status management system, and the operation status management program described in each embodiment can be described as follows.

An operation status management method according to a first aspect includes:
acquiring apparatus position information indicating a position of one or more work apparatuses that include a plurality of travel modes, and perform work in a field, and travel mode information indicating a travel mode of the work apparatus; and
outputting work apparatus information indicating a position of the work apparatus and a travel mode of the work apparatus, in association with each other.

An operation status management method according to a second aspect is the operation status management method according to the first aspect, wherein
the work apparatus information indicates an image indicating a position of the work apparatus on a map.

An operation status management method according to a third aspect is the operation status management method according to the first or second aspect, wherein
the plurality of travel modes include
a manual travel mode in which the work apparatus is manually controlled by a worker riding on the work apparatus, and
an automatic travel mode in which the work apparatus is controlled from a control terminal that is communicably connected to the work apparatus.

An operation status management method according to a fourth aspect is the operation status management method according to the third aspect, wherein
the automatic travel mode includes
a boarding travel mode in which the work apparatus is controlled from the control terminal that is loaded in the work apparatus, while a worker is riding on the work apparatus, and
a non-boarding travel mode in which the work apparatus is controlled from the control terminal that is not loaded in the work apparatus, without a worker riding on the work apparatus.

An operation status management method according to a fifth aspect is the operation status management method according to the fourth aspect, wherein
the work apparatus information includes control terminal information related to the control terminal that controls the work apparatus, when the work apparatus is controlled in the non-boarding travel mode.

An operation status management method according to a sixth aspect is the operation status management method according to the firth aspect, wherein
the control terminal information indicates a position of the control terminal.

An operation status management method according to a seventh aspect is the operation status management method according to the fifth or sixth aspect, wherein
the control terminal information indicates a worker who operates the control terminal.

An operation status management method according to an eighth aspect is the operation status management method according to any one of the first to seventh aspects, further including:
displaying the work apparatus information.

An operation status management system according to a ninth aspect includes:
an information acquisition unit that acquires position information indicating a position of one or more work apparatuses that include a plurality of travel modes, and perform work in a field, and travel mode information indicating a travel mode of the work apparatus; and
an output unit that outputs work apparatus information indicating a position of the work apparatus and a travel mode of the work apparatus, in association with each other.

An operation status management program according to a tenth aspect causes an arithmetic device to execute:
acquiring position information indicating a position of one or more work apparatuses that include a plurality of travel modes, and perform work in a field, and travel mode information indicating a travel mode of the work apparatus; and
outputting work apparatus information indicating a position of the work apparatus and a travel mode of the work apparatus, in association with each other.

### REFERENCE SIGNS LIST

1, 2, 3, 4: Storage medium
20: Network
50: Travel mode display area
60: Worker position
70: Association line
100: Work apparatus
105: Work machine
110: Input/output device
115: Position measuring device
120: Arithmetic device
130: Communication device
140: Storage device
150: Automatic travel unit
160: Information output unit
200: Control terminal
210: Input/output device
215: Position measuring device
220: Arithmetic device
230: Communication device
240: Storage device
250: Apparatus control unit
260: Information output unit
300: Operation status management device
310: Input/output device
320: Arithmetic device
330: Communication device
340: Storage device
350: Information acquisition unit
360: Correspondence determination unit
370: Output unit
400: Display terminal
410: Input/output device
420: Arithmetic device
430: Communication device
440: Storage device
450: Display unit
500: Travel program
510: Worker data
520: Control data
530: Apparatus control program
540: Work apparatus data
550: Operation status management program
560: Display program
570: Control terminal data
600: Field
1000: Operation status management system

## Claims

1. An operation status management method comprising:
acquiring apparatus position information indicating a position of one or more work apparatuses that include a plurality of travel modes, and perform work in a field, and travel mode information indicating a travel mode of the work apparatus; and
outputting work apparatus information indicating a position of the work apparatus and a travel mode of the work apparatus, in association with each other.

2. The operation status management method according to claim 1, wherein
the work apparatus information indicates an image indicating a position of the work apparatus on a map.

3. The operation status management method according to claim 1 or 2, wherein
the plurality of travel modes include
a manual travel mode in which the work apparatus is manually controlled by a worker riding on the work apparatus, and
an automatic travel mode in which the work apparatus is controlled from a control terminal that is communicably connected to the work apparatus.

4. The operation status management method according to claim 3, wherein
the automatic travel mode includes
a boarding travel mode in which the work apparatus is controlled from the control terminal that is loaded in the work apparatus, while a worker is riding on the work apparatus, and
a non-boarding travel mode in which the work apparatus is controlled from the control terminal that is not loaded in the work apparatus, without a worker riding on the work apparatus.

5. The operation status management method according to claim 4, wherein
the work apparatus information includes control terminal information related to the control terminal that controls the work apparatus, when the work apparatus is controlled in the non-boarding travel mode.

6. The operation status management method according to claim 5, wherein
the control terminal information indicates a position of the control terminal.

7. The operation status management method according to claim 5, wherein
the control terminal information indicates a worker who operates the control terminal.

8. The operation status management method according to claim 1 or 2, further comprising:
displaying the work apparatus information.

9. An operation status management system comprising:
an information acquisition unit that acquires position information indicating a position of one or more work apparatuses that include a plurality of travel modes, and perform work in a field, and travel mode information indicating a travel mode of the work apparatus; and
an output unit that outputs work apparatus information indicating a position of the work apparatus and a travel mode of the work apparatus, in association with each other.

10. An operation status management program that causes an arithmetic device to execute:
acquiring position information indicating a position of one or more work apparatuses that include a plurality of travel modes, and perform work in a field, and travel mode information indicating a travel mode of the work apparatus; and
outputting work apparatus information indicating a position of the work apparatus and a travel mode of the work apparatus, in association with each other.
